# EUROPEAN PATENT SPECIFICATION

(11) **EP 2 048 960 B1**
(45) Date of publication and mention of the grant of the patent: **22.09.2010**
(21) Application number: 07815680.9
(22) Date of filing: 26.07.2007
(51) Int. Cl.: A22C 17/00

(54) **METHOD AND DEVICE FOR THE COMPOSITION OF SATÉS**
VERFAHREN UND VORRICHTUNG ZUR ZUSAMMENSETZUNG VON SATS
PROCÉDÉ ET DISPOSITIF POUR LA COMPOSITION DE SATÉS

(30) Priority: 09.08.2006 BE 200600426
(43) Date of publication of application: 22.04.2009
(73) Proprietor: N.V. JIP, 2520 Ranst (BE)
(72) Inventor: BERTENS, Leo Ludovicus C., 2520 Ranst (BE)
(74) Representative: D'Halleweyn, Nele Veerle Trees Gertrudis
(86) International application number: PCT/BE2007/000096
(87) International publication number: WO 2008/017133

(56) References cited:
- BE-A- 1 009 589
- US-A- 5 100 366

## Description

The present invention concerns a device and method for composing skewers of meat.

Devices for composing skewers of meat are already known which consist of a longitudinal holder that is provided with several cup-shaped recesses following one another in the longitudinal direction of the holder, whereby the cup-shaped recesses have a bottom and an open side, in which the food such as pieces of meat or vegetables can be provided, and whereby a passage is provided between the cup-shaped recesses to put in a skewer that continues up to the open side of the recesses, such that after the skewer has been provided, the skewered meat can be taken out of the holder.

In other words, with every holder of such a known device can be composed one skewer of meat.

Such a type of device is for example known from US 5.100.366.

However, a disadvantage of these known devices is that composing the skewer of meat with different ingredients, such as for example skewers of meat whereby different sorts of meat or vegetables and meat are alternated, is complicated and very labour-intensive, since every ingredient must be provided in the appropriate cup-shaped recess.

Besides, the different ingredients have different sizes, especially in the case of vegetables and meat, such that every time a skewer of meat is prepared with a new combination of ingredients, another type of holder must be used whose cup-shaped recesses correspond to the sizes of the ingredients.

Moreover, the holders often consist of several elements with one cup-shaped recess that are coupled to each other, which leads to a lot of assembly and disassembly work when the combination of ingredients is changed.

Another disadvantage of the known devices for making skewers of meat is that, when the skewer is applied, it will choose the line of least resistance, as a result of which the skewer will often go in the direction of the open side of the recesses and will thus end up slantwise in the pieces of meat and the vegetables.

Moreover, relatively much force must be exerted on the skewers, among others to prevent the skewer from going slantwise, such that skewers will have to be used having a larger diameter than the skewers that are normally available, in particular skewers having a diameter of some 3 mm.

Naturally, these special skewers are more expensive, and composing the skewers of meat by means of the known devices is rather time-consuming because of the aforesaid difficulties, which is also disadvantageous to the cost price of such skewers of meat.

Another type of device for composing skewers of meat is known from BE 1.009.589. This device is specially made for providing folded meat pieces on a skewer by repeatedly pushing a skewer through a meat piece. Such a device is completely not suitable for applying different kinds of ingredients and the method is very time consuming.

The present invention aims to remedy one or several of the above-mentioned and other disadvantages.

To this end, the present invention concerns a device for composing skewers of meat, comprising a number of holders which are stacked for applying a skewer and that are each provided with at least one cup-shaped recess with an open side and an opposite bottom, in which is situated a passage for applying a skewer in a direction that follows the stacking direction of the holder, whereby the holders are split at the above-mentioned passage so as to form several parts.

A first advantage of such a device according to the invention is that it is much more appropriate than the known devices for composing several skewers of meat that are each formed of a combination of ingredients.

The reason is that every holder can be easily filled with a single ingredient, after which, by.stacking the holders in the desired order, the right combination of ingredients can be obtained for the skewer of meat.

It is also possible to lay several ingredients, such as meat and vegetables, in layers in every holder.

Moreover, it is possible to provide several types of holders whereby the dimensions of the cup-shaped recesses per holder are adjusted to the ingredient to be applied.

An advantage of such a device according to the invention is that the holders can be simply stacked without much assembly and disassembly work.

To that end, the holders are preferably provided with positioning means, such that the passages are situated on top of one another when stacking, as a result of which the skewers can be provided through the passages in one continuous movement, whereby the ingredients are impaled on the skewers in the holders in this manner.

Another advantage of a device according to the invention is that the skewers can be applied far more easily, since the food, after having been stacked, is clamped between the bottoms of successive holders, save for the top side, as a result of which the skewer is no longer inclined to deviate.

Moreover, the passages are preferably provided with a tapered guide which makes it even more easy to apply a skewer.

The fact that the holders are formed of several parts offers an additional advantage in that the skewer of meat that has been composed in the holders can be easily removed by disassembling the parts.

According to a preferred embodiment of a device according to the invention, the holders are longitudinal and provided with several aforesaid cup-shaped recesses that succeed one another in the longitudinal direction of the holder.

Such a device according to this embodiment is very advantageous, since large numbers of skewers of meat can be composed with it very quickly, either or not in an automated manner, which is advantageous to the cost price of the skewers of meat of course.

The invention also concerns a method for composing skewers of meat which makes use of an aforesaid device according to the invention, whereby this method consists in applying the pieces of food for the skewers of meat to be composed in an aforesaid holder by putting the food in the holder via the open side; in stacking the holders next to one another or on top of one another in such a way that the bottom of one holder ends up on or against the open side of the following holder; in pushing at least one skewer via the open side of the stacked holders through the food and the passages in the bottoms of the stacked holders; and in taking the skewer or skewers of meat out by disassembling the parts of the stacked holders.

In order to better explain the characteristics of the invention, the following preferred embodiments of a device for composing a skewer of meat are represented with reference to the accompanying drawings, in which:
figures 1 and 2 represent a holder of a device according to the invention in perspective, in an assembled and disassembled condition respectively;
figures 3 and 4 represent several holders according to figures 1 and 2 in perspective, which together form a device according to the invention, stacked next to each other and on top of -each other respectively;
figures 5 and 6 represent the device in the position of figure 4, before and after the skewers have been applied respectively;
figure 7 represents a section according to line VII-VII in figure 6;
figure 8 shows the device of figures 3 to 7 in perspective, at the time the skewer of meat is being disassembled;
figure 9 represents a section of another embodiment of a device according to the invention whereby means are provided for applying skewers;
figures 10 to 15 represent a more practical embodiment of a device according to the invention in successive positions while the skewer of meat is being composed; and,
figure 16 schematically represents yet another embodiment of a device according to the invention, whereby a more evolved form of automation is applied.

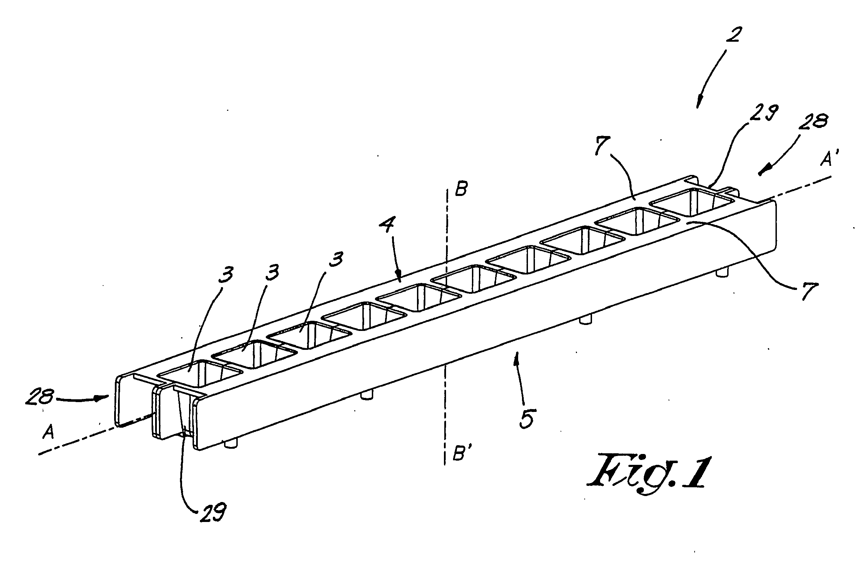

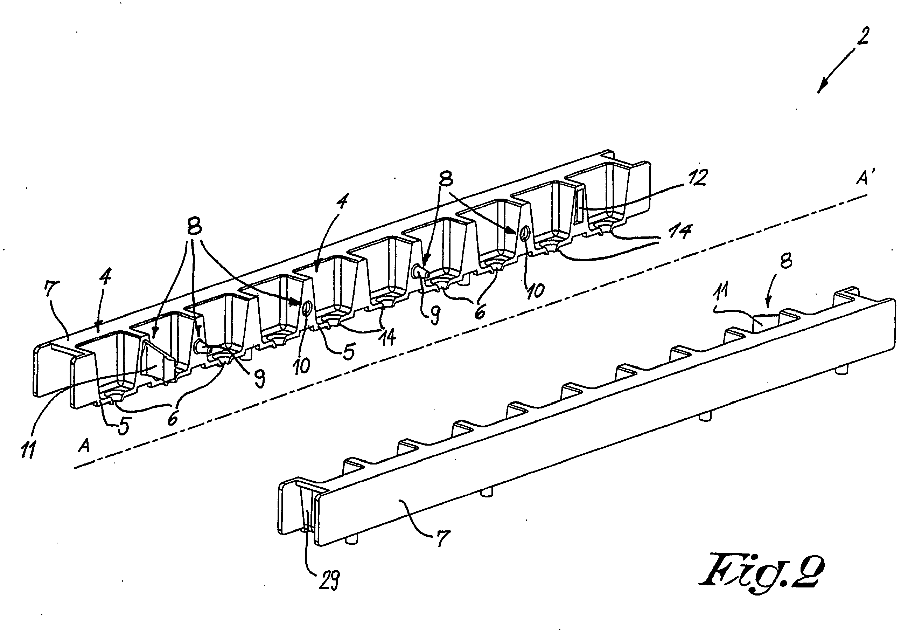

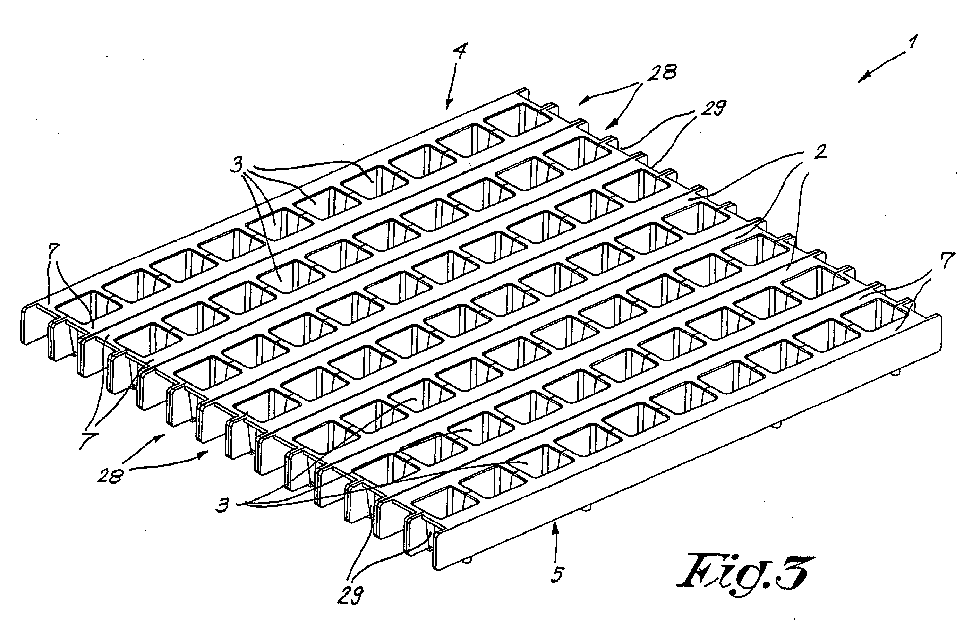

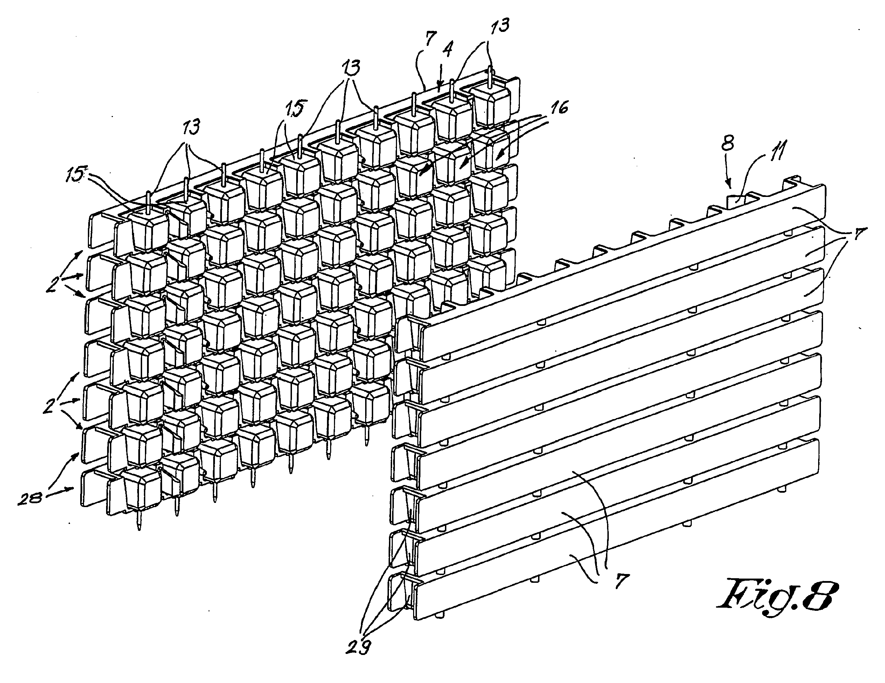

The device 1 according to the invention for composing skewers of meat as represented in figures 3 to 8 comprises a number of holders 2 that can be stacked, in this case seven, one sample of which is represented in figures 1 and 2.

In the given example, such a holder is a longitudinal element that is provided with several cup-shaped recesses 3, in this case ten, succeeding one another according to the longitudinal direction AA' of the holder 2.

These cup-shaped recesses 3 have an open side 4 and an opposite bottom 5, in which a passage 6 is situated.

According to the invention, the holders 2 are split at the aforesaid passage 6 so as to form two parts 7, made identical in this case, and which can be disconnected by means of coupling means 8 that are complementary to one another.

As is represented in detail in figure 2, these coupling means 8 are formed of dowel pins 9 that can work in conjunction with fitted holes 10, and also of male parts 11 and female parts 12 of a snap-in system.

According to a preferred embodiment, the cup-shaped recesses 3 are conical from the open side 4 towards the bottom 5.

In order to obtain skewers of meat having the usual shape, the section of the recesses 3 according to a plane that is perpendicular to the direction BB' of the stacking of the holders 2 is almost square or rectangular. Of curse, any other possible shape is not excluded either.

Further, the diameter of the passages 6 preferably corresponds practically to the diameter of a skewer 13.

In order to make it easy to apply a skewer 13, the passages 6 are provided with a tapered guide 14.

The device 1 is preferably also provided with positioning means, such that when stacking the holders 2, the passages are situated on top of each other.

Such positioning means may for example be a number of dowel pins and fitted holes on the top side and the lower side of the holders 2, working in conjunction with each other, such that stacked holders 2 can only take up one position when being stacked.

On the other hand, the same effect can be obtained by means of a sort of guide in between which the holders are provided during the stacking.

The use and working of a device 1 according to the invention is simple and as follows.

In order to compose ten skewers of meat with seven pieces of meat 15 or other pieces of food each, the ten cup-shaped recesses 3 of seven holders 2 are first filled with ingredients.

If skewers of meat are to be composed with only one type of ingredient 15, for example a specific type of meat, the holders 2 can be arranged next to one another as represented in figure 3, such that by applying the ingredient 15 in the holders 2, the cup-shaped recesses 3 can be easily filled simultaneously with the ingredient.

On the other hand, every holder 2 can be individually filled with another ingredient 15, such that skewers of meat can be composed that are a combination of different types of ingredients 15.

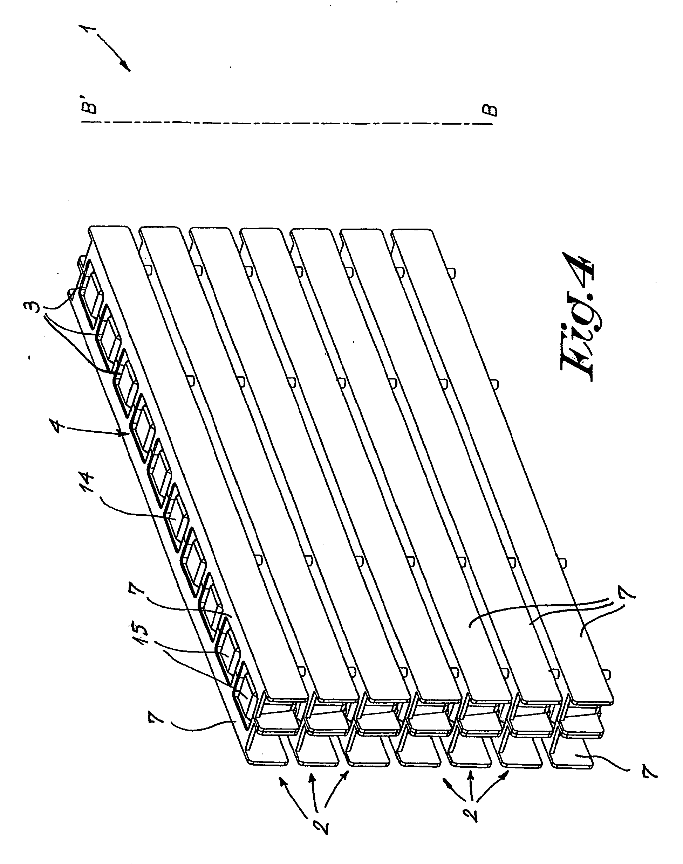

In a second step, the holders 2 are stacked on top -of each other, as represented in figure 4.

As a result, the pieces of meat or the ingredients 15 of the different holders 2 end up on top of each other, as well as the passages 6.

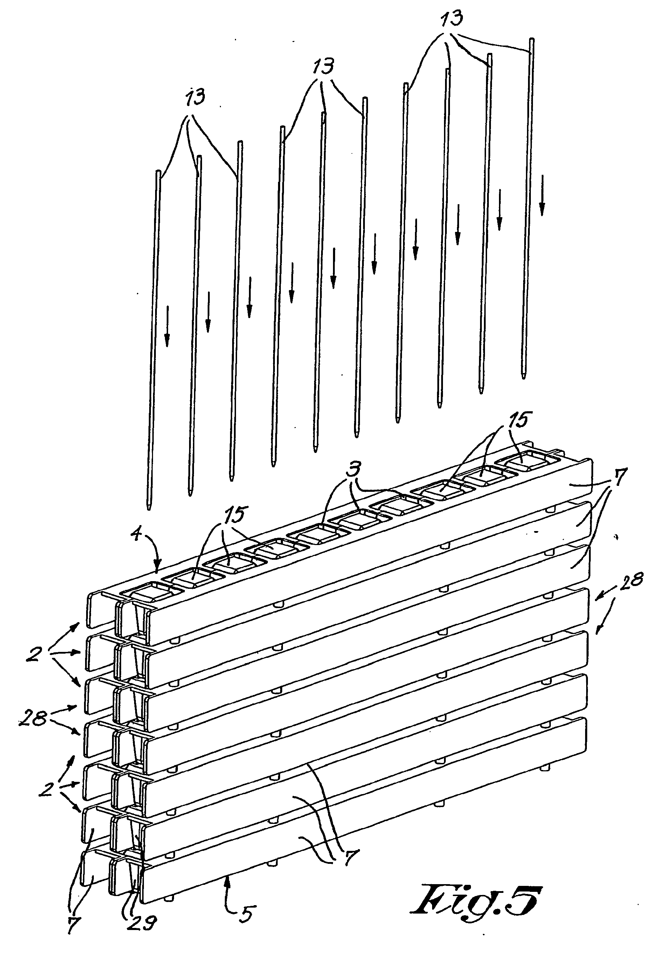

This makes it possible, as represented in figure 5, to apply skewers 13 through the open sides 4 of the topmost holder 2.

As the passages 6 are provided with a tapered guide 14, the skewers 13 are guided effortlessly through the passages 6 while the pieces of meat 15 are being impaled.

Moreover, the meat or ingredient 14 is caught in the holders 2 between the walls of the cup-shaped recesses 3 and the bottom 5 of the following holder 2, as a result of which a skewer 13 will not tend to divert from the straight track while being applied, as is the case with known devices 1.

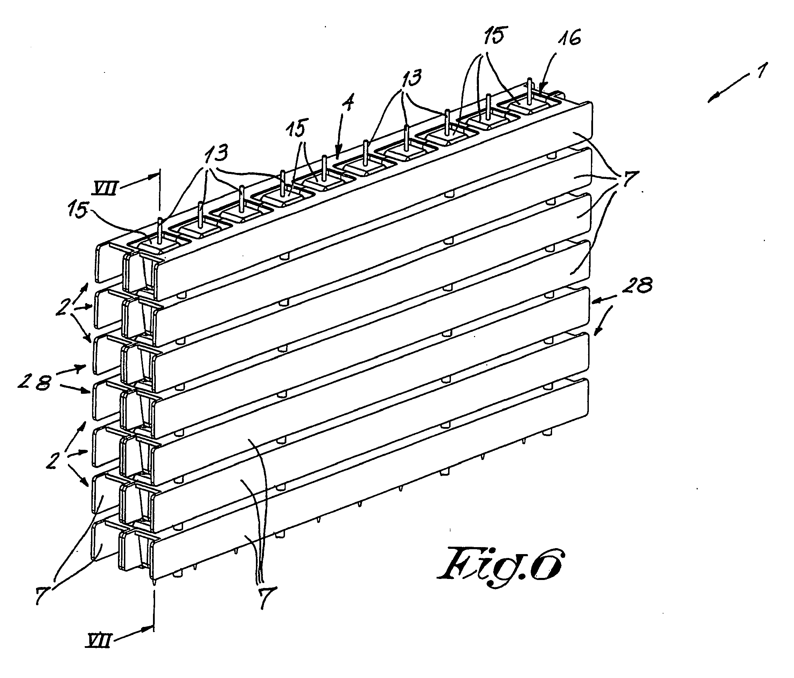

After the skewers 13 have been applied, the result of figure 6 is obtained, whereby the seven pieces of meat 7 of holders 2 stacked on top of each other are impaled by means of the skewers 13 so as to form a skewer of meat 16.

Finally, the obtained skewers of meat 16 are taken out of the holders 2 by disassembling the parts 7 of each holder 2.

It is clear that with a device 1 according to the invention, it is possible to compose skewers of meat in a very efficient manner, whereby it is moreover simple to make skewers of meat with a combination of ingredients.

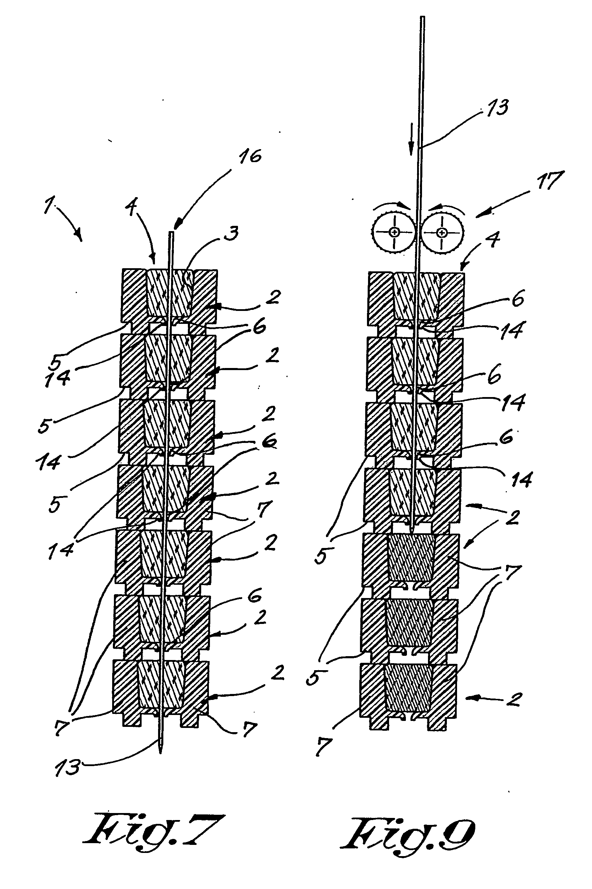

Figure 9 schematically represents an embodiment of a device 1 according to the invention, whereby a mechanism 17 is provided for applying skewers 13.

This mechanism 17 consists of two rollers or wheels 18 of which at least one can be driven and between which the skewers 13 can be held.

In this manner, several skewers 13 can be simultaneously provided through the successive recesses 3 of the staked holders 2, such that much time can be gained.

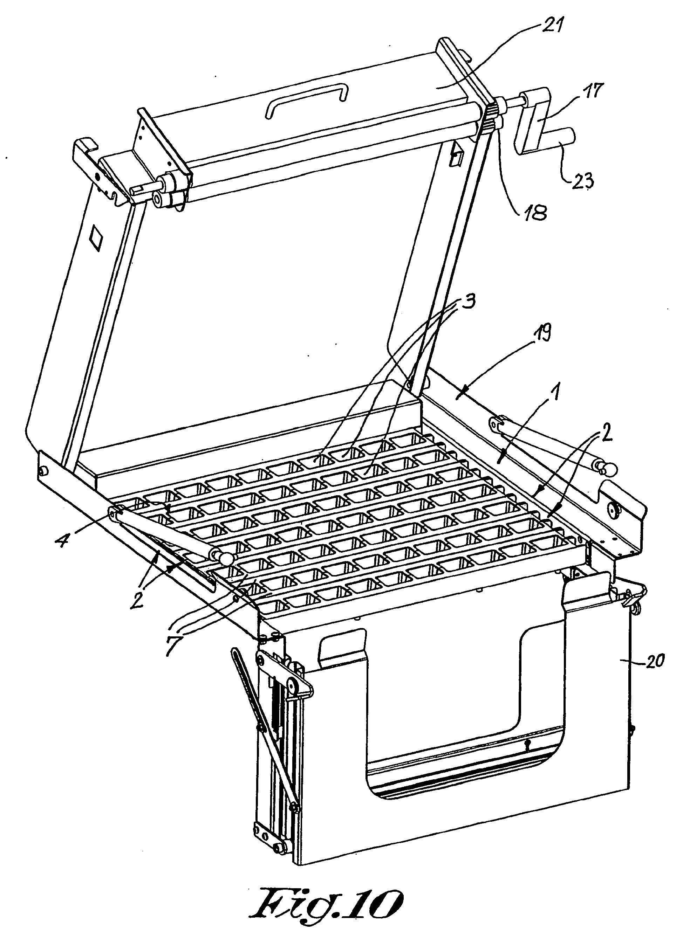

Figures 10 to 15 represent yet another, more practical embodiment of a device 1 according to the invention.

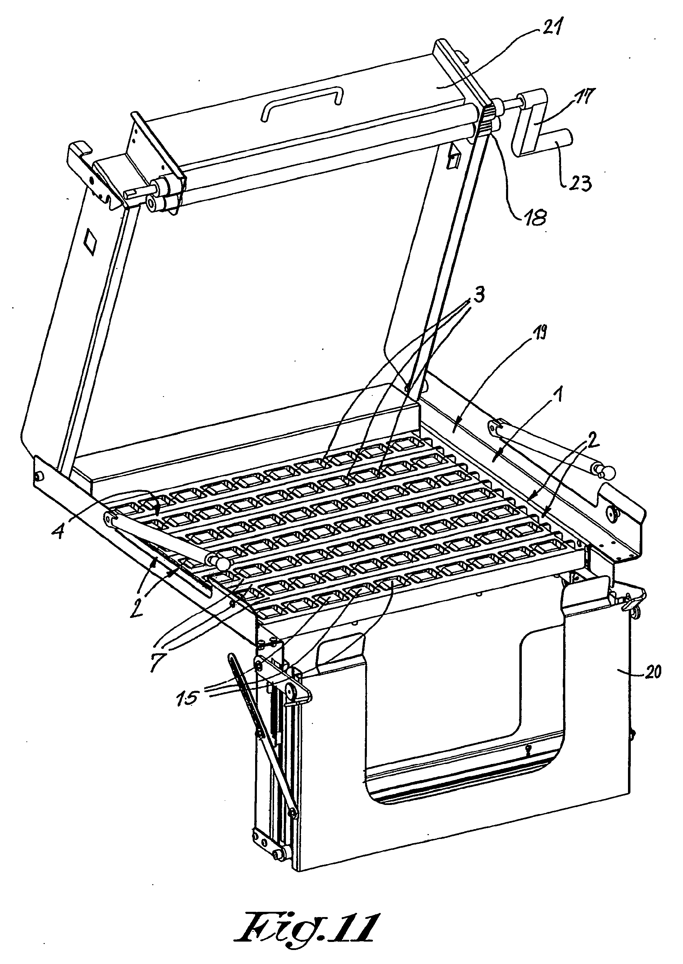

This device 1 is provided with a first drawer 19 in which the holders 2 can be arranged next to each other in a fitting manner in order to fill the recesses 3 with food 14 via the open side 4, as represented in figures 10 and 11.

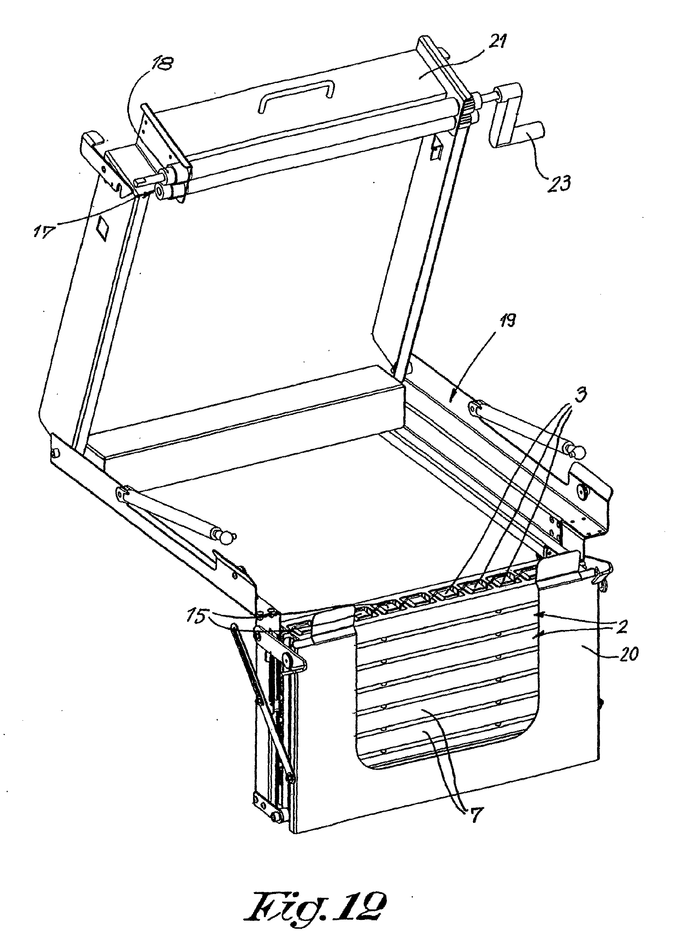

Further, there is also a second drawer 20 for applying skewers 13 in which the holders 2 are held after they have been stacked, as represented in figure 12.

In order to transfer the holders 2 from the first drawer 19 to the second drawer 20, the holders 2 can be shifted one by one by a person for example.

On the other hand, it is possible to provide appropriate means to that end which make use of guides, for example, provided at the far ends of the holders 2.

Such means may for example consist of an electrically driven chain or conveyor belt which can make the holders move from the first drawer 19 to the second drawer 20.

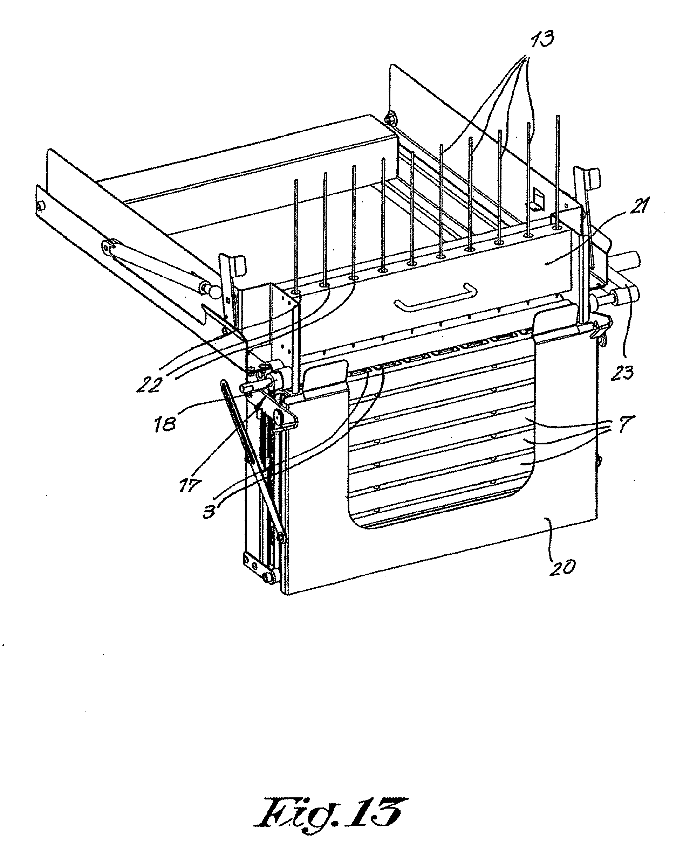

In the embodiment of figure 13, the device 15 is also provided with a skewer holder 21 in which skewers 13 can be provided.

In this skewer holder 21 are provided cylindrical passages 22 which open in an aforesaid mechanism 17 consisting of two rollers 18.

When skewers 13 are provided in the passages 22, they rest with their tips between the rollers 18 of the mechanism 17.

By driving at least one of the rollers 18 by means of a crank 23, these skewers 13 are skewered through the pieces of meat 15.

It is clear that, with such a mechanism 17, very much time can be gained.

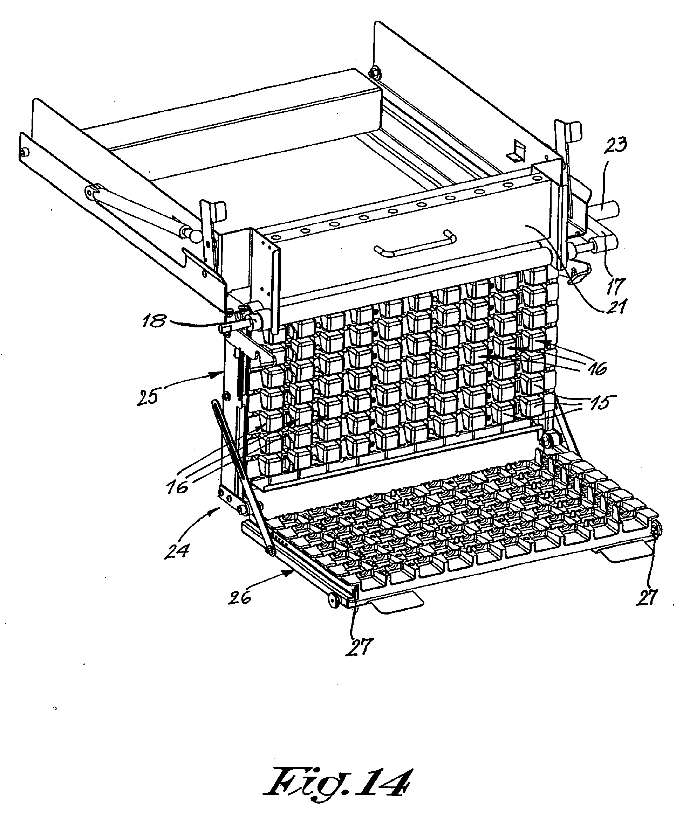

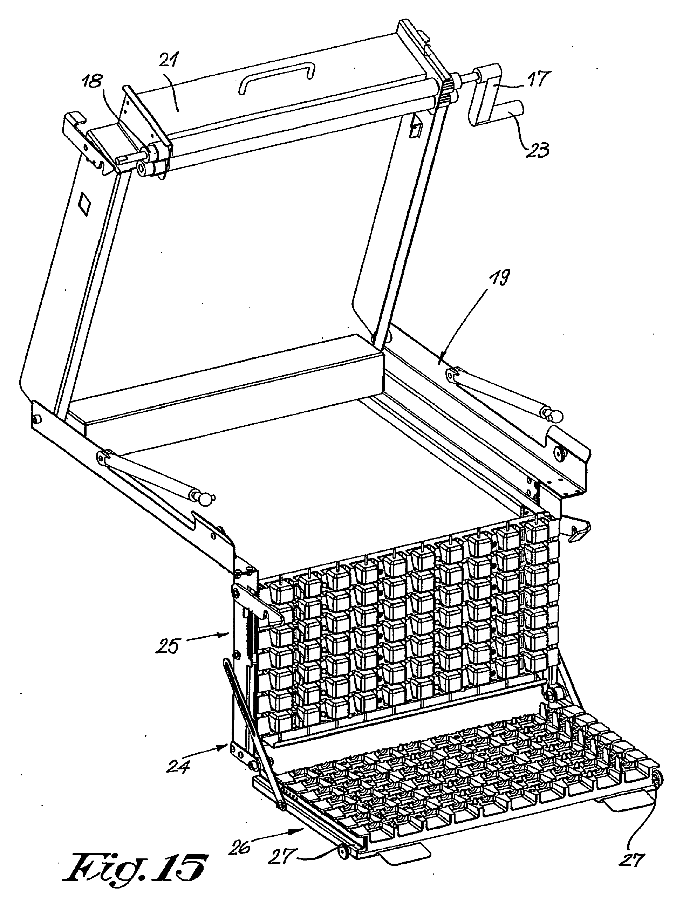

As is represented in figures 14 and 15, also means 24 are further provided in this practical embodiment for moving the parts 7 of the holders 2 away from each other, after the skewers 13 have been provided, such that the obtained skewers of meat 16 can be removed from the holders 2.

In the given embodiment, these means 24 consist of a first part 25 and a second part 26 of the second drawer 20 that are hinge-mounted in relation to each other.

Every above-mentioned part 25 and 26 is hereby provided with a rail 27 at its edges 5, with which the holders 2 can co-operate.

For, each part 7 of the holders 2 is provided with a slot 29 at its far ends 28 in which the rail 27 fits.

As the aforesaid parts 25 and 26 of the second drawer 20 hinge open, each part 7 of each holder 2 remains connected to the corresponding part 25 and 26 of the second drawer 20 thanks to the co-operation between the rails 27 and the slots 29.

As a result, the connection between the parts 7 of the holders 2 is broken.

It is also clear once more that with this embodiment of a device 1 according to the invention, one can work very efficiently.

Naturally, many alternatives are possible. For example, the rollers 18 of the mechanism 17 must not necessarily be driven by means of a crank 23, but an electrically controlled drive could be provided to that end, for example.

Also numerous alternatives for the coupling means 8 are possible, as well as for the means 24 that interrupt the coupling.

The parts could be coupled to one another by means of an electromagnetic field, for example, whereby the coupling is interrupted by switching the electromagnetic field off again.

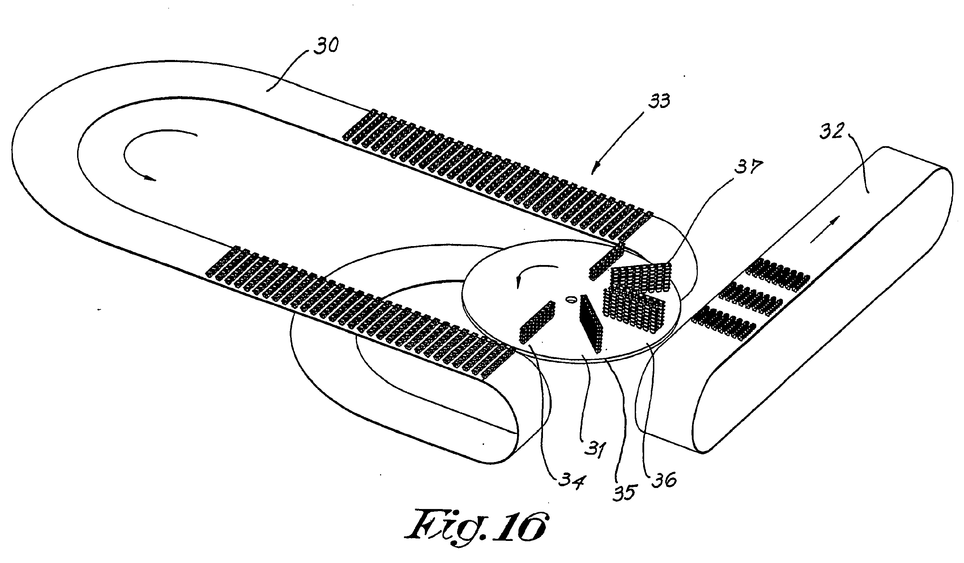

Figure 16 is a schematic overview of a still further automated embodiment of a device 1 according to the invention, which, just as the preceding embodiment, comprises a number of holders 2 that can be stacked, but whereby a first conveyor belt 30 is also provided with a turntable 31 erected in between, which in turn leads to a second conveyor belt 32.

With such a device 1 according to this embodiment, the purpose is to form a closed circuit of holders 2 on the first conveyor belt 30 and the turntable 31, whereby the holders 2 are being driven at the starting point 33 of the first conveyor belt 30 and are for example rinsed first somewhat further down, for example by making the holders 2 move through an industrial washing machine that is not represented in the figures.

Still further down on the first conveyor belt 30, the holders 2 can be filled with meat 15 or another ingredient, either manually or for example by means of a robot 30 or the like.

The filled holders 2 are then driven by the first conveyor belt 30 up to the turntable 31, whereby they are stacked on top of one another on the turntable 31.

This can be easily automated as well, for example by making the turntable 31 progress in steps, whereby a jib picks up a number of holders 2 from the proceeding conveyor belt 30 during a standstill of the turntable 31 and each time places them in the same spot 34 on the turntable 31 on the preceding holder 2 until a sufficient number of holders 2 have been placed on top of each other, after which the turntable 31 can be rotated further into a following position.

The stacked, filled holders can be provided with skewers 13 in a following position 35 of the turntable 31, for example by means of an automated mechanism 17 as in one of the preceding embodiments.

In yet another position 36 of the turntable 31, the obtained skewer of meat 16 can be taken from the holders 2 by disassembling the parts 7, for which many alternatives are again conceivable.

At that time, the turntable 31 has rotated opposite the second conveyor belt 32, where the skewers of meat 16 can be taken out of the holders 2 and can be arranged on the second conveyor belt 32, for example again by a robot or the like.

The second conveyor belt 32 then leads the skewers of meat 16 further to a packaging unit or the like.

In order to close the circuit, in a still farther position 37 of the turntable 31, the holders 2 are coupled to each other again by means of the coupling means 8, and in a position of the turntable 31 exactly opposite the starting point 33 of the first conveyor belt 30 of the turntable 31, the holders 2 are taken up one after the other to be supplied again as new holders 2.

It is clear that, in this manner, the entire process of composing skewers of meat can be highly automated.

Naturally, many alternative embodiments are possible for such a device 1 according to the last embodiment.

The invention is by no means restricted to the device for composing skewers of meat described as an -example; on the contrary, such a device can be made according to many different variants while still remaining within the scope of the invention.

Also many alternative embodiments are possible for the method according to the invention for composing skewers of meat while still remaining within the scope of the invention.

## Claims

1. Device (1) for composing skewers of meat (16), **characterised in that** it comprises a number of holders (2) which are stacked for applying a skewer (13) and which are each provided with at least one cup-shaped recess (3) having an open side (4) and an opposite bottom (5), in which there is a passage (6) for applying a skewer (13) in a direction that follows the stacking direction (BB') for the holders (2), whereby the holders (2) are split at the aforesaid passage (6) so as to form several parts (7).

2. Device according to claim 1, **characterised in that** the holders (2) are longitudinal and are provided with several aforesaid cup-shaped recesses (3) that succeed one another in the longitudinal direction (AA') of the holder (2).

3. Device according to claim 1 or 2, **characterised in that** the cup-shaped recesses (3) are tapered as of the open side (4) towards the bottom (5).

4. Device according to any one of the preceding claims, **characterised in that** the section of the recesses (3) according to a plane perpendicular to the direction (BB') of the stacking of the holders (2) is practically rectangular or square.

5. Device according to any one of the preceding claims, **characterised in that** the diameter of the passages (6) practically corresponds to the diameter of a skewer (13).

6. Device according to any one of the preceding claims, **characterised in that** the passages (6) are provided with a tapered guide (14) for applying a skewer (13).

7. Device according to any one of the preceding claims, **characterised in that** it is provided with positioning means (5), such that when the holders (2) are being stacked, the passages (6) are situated on top of each other.

8. Device according to any one of the preceding claims, **characterised in that** the holders (2) are mainly composed of two symmetrical or identical parts (7).

9. Device according to claim 8, **characterised in that** the parts (7) are provided with complementary coupling means (8) for coupling the parts (7) together, preferably in the form of dowel pins (9) that can work in conjunction with fitted holes (10).

10. Device according to any one of the preceding claims, **characterised in that** it is provided with a mechanism (17) for applying skewers (13) which consists of two rollers or wheels (18), at least one of which can be driven and in between which the skewers (13) can be held.

11. Device according to any one of the preceding claims, **characterised in that** it is provided with a first drawer (19) in which the holders (2) can be arranged next to each other in a fitting manner in order to fill the recesses (3) with food (15) via the open side (4), and with a second drawer (20) for applying skewers (13) in which the holders (2) are held after they have been stacked on each other.

12. Device according to claim 11, **characterised in that** means are provided for transmitting the holders (2) from the first drawer (19) to the second drawer (20).

13. Device according to claim 12, **characterised in that** the aforesaid means make use of guides that are provided on the far ends (28) of the holders (2).

14. Device according to any one of the preceding claims, **characterised in that** means (24) are provided for moving the parts (7) of the holders (2) away from each other, after the skewers (13) have been provided, so as to be able to remove the obtained skewers of meat (16) from the holders (2).

15. Method for composing skewers of meat (16), whereby use is made of a device (1) according to any one of the preceding claims, **characterised in that** it consists in putting the pieces of food (15) of the skewers of meat to be composed in an aforesaid holder (2), whereby the food (15) is provided via the open side (4); in stacking the holders (2) next to or on top of each other, such that the bottom (5) of one holder (2) ends up on or against the open side (4) of the following holder (2); in pushing at least one skewer (13) via the open side (4) of the stacked holders (2) through the food (15) and the passages (6) in the bottoms (5) of the stacked holders (2); and in taking the skewer or skewers of meat (16) out by disassembling the parts (7) of the stacked holders (2).

## Patentansprüche

1. Vorrichtung (1) zum Zusammensetzen von Fleischspießen (16), **dadurch gekennzeichnet, dass** sie eine Anzahl an Halter (2) aufweist, die zum Anbringen eines Spießes (13) gestapelt werden und die mit mindestens einer becherförmigen Ausnehmung (3) versehen sind, die eine offene Seite (4) und einen gegenüberliegenden Boden (5) aufweist, in dem ein Kanal (6) zum Anbringen eines Spießes (13) in einer Richtung vorhanden ist, die der Stapelrichtung (BB') für die Halter (2) folgt, wobei die Halter (2) an dem vorstehend erwähnten Kanal (6) so aufgeteilt sind, dass sie mehrere Teile (7) bilden.

2. Vorrichtung gemäß Anspruch 1, **dadurch gekennzeichnet, dass** die Halter (2) länglich ausgebildet und mit mehreren der vorstehend erwähnten becherförmigen Ausnehmungen (3) versehen sind, die in der Längsrichtung (AA') des Halters (2) aufeinander folgen.

3. Vorrichtung gemäß Anspruch 1 oder 2, **dadurch gekennzeichnet, dass** die becherförmigen Ausnehmungen (3) bezüglich der offenen Seite (4) zu dem Boden (5) hin abgeschrägt sind.

4. Vorrichtung gemäß einem der vorherigen Ansprüche, **dadurch gekennzeichnet, dass** der Schnitt der Ausnehmungen (3) gemäß einer Ebene, die senkrecht zu der Richtung (BB') zum Stapeln der Halter (2) ist, praktisch rechteckig oder quadratisch ist.

5. Vorrichtung gemäß einem der vorherigen Ansprüche, **dadurch gekennzeichnet, dass** der Durchmesser des Kanals (6) praktisch dem Durchmesser eines Spießes (13) entspricht.

6. Vorrichtung gemäß einem der vorherigen Ansprüche, **dadurch gekennzeichnet, dass** die Kanäle (6) mit einer abgeschrägten Führung (14) zum Anbringen eines Spießes (13) versehen sind.

7. Vorrichtung gemäß einem der vorherigen Ansprüche, **dadurch gekennzeichnet, dass** sie mit einer Positionseinrichtung (5) derart versehen ist, dass, wenn die Halter (2) gestapelt sind, die Kanäle (6) übereinander angeordnet sind.

8. Vorrichtung gemäß einem der vorherigen Ansprüche, **dadurch gekennzeichnet, dass** die Halter (2) hauptsächlich aus zwei symmetrischen oder identischen Teilen (7) zusammengesetzt sind.

9. Vorrichtung gemäß Anspruch 8, **dadurch gekennzeichnet, dass** die Teile (7) mit komplementären Kopplungseinrichtungen (8) zum Aneinanderkoppeln der Teile (7) versehen sind, und vorzugsweise in der Gestalt von Passstiften (9), die mit Passlöchern (10) zusammenwirken können.

10. Vorrichtung gemäß einem der vorherigen Ansprüche, **dadurch gekennzeichnet, dass** sie mit einem Mechanismus (17) zum Anbringen von Spießen (13) versehen ist, der aus zwei Walzen oder Rädern (18) besteht, von denen zumindest eine/einer angetrieben werden kann und zwischen denen die Spieße (13) gehalten werden können.

11. Vorrichtung gemäß einem der vorherigen Ansprüche, **dadurch gekennzeichnet, dass** sie mit einem Schubfach (19) versehen ist, in dem die Halter (2) nebeneinander passend angeordnet werden können, um die Ausnehmungen (3) über die offene Seite (4) mit Nahrungsmitteln (15) zu füllen, und dass sie mit einem zweiten Schubfach (20) zum Anbringen von Spießen (13) versehen ist, in dem die Halter (2) gehalten werden, nachdem sie aneinander gestapelt wurden.

12. Vorrichtung gemäß Anspruch 11, **dadurch gekennzeichnet, dass** eine Einrichtung zum Transportieren der Halter (2) von dem ersten Schubfach (19) zu dem zweiten Schubfach (20) vorgesehen ist.

13. Vorrichtung gemäß Anspruch 12, **dadurch gekennzeichnet, dass** die vorstehend erwähnte Einrichtung Führungen verwendet, die an den entfernten Enden (28) der Halter (2) vorgesehen sind.

14. Vorrichtung gemäß einem der vorherigen Ansprüche, **dadurch gekennzeichnet, dass** eine Einrichtung (24) vorgesehen ist, um die Teile (7) des Halters (2) voneinander weg zu bewegen, nachdem die Spieße (13) vorgesehen wurden, um so die erhaltenen Fleischspieße (16) aus den Haltern (2) entnehmen zu können.

15. Verfahren zum Zusammensetzen von Fleischspießen (16), wobei eine Vorrichtung (1) gemäß einem der vorherigen Ansprüche verwendet wird, **dadurch gekennzeichnet, dass** es aus Folgendem besteht: Setzen der Nahrungsmittelstücke (15) der zusammenzusetzenden Fleischspieße in einen vorstehend erwähnten Halter (2), wobei die Nahrungsmittel (15) über die offene Seite (4) vorgesehen werden; Stapeln der Halter (2) neben- oder übereinander, so dass der Boden (5) von einem Halter (2) an oder gegen die offene Seite (4) des folgenden Halters (2) abschließt; Drücken von zumindest einem Spieß (13) über die offene Seite (4) der gestapelten Halter (2) durch das Nahrungsmittel (15) und die Kanäle (6) in die Böden (5) der gestapelten Halter (2); und Entnehmen des Fleischspießes oder der Fleischspieße (16) durch Demontieren der Teile (7) der gestapelten Halter (2).

## Revendications

1. Dispositif (1) pour composer des brochettes de viande (16), **caractérisé en ce qu'**il comprend un certain nombre de supports (2) qui sont empilés pour appliquer une brochette (13) et qui sont chacun pourvus d'au moins une cavité en forme de coupe (3) ayant un côté ouvert (4) et un fond opposé (5), dans lequel se trouve un passage (6) pour appliquer une brochette (13) dans une direction qui suit le sens d'empilement (BB') pour les supports (2), de sorte que les supports (2) soient scindés au niveau du passage mentionné ci-dessus (6) afin de former plusieurs parties (7).

2. Dispositif selon la revendication 1, **caractérisé en ce que** les supports (2) sont longitudinaux et sont pourvus de plusieurs desdites cavités en forme de coupe (3) qui se suivent dans la direction longitudinale (AA') du support (2).

3. Dispositif selon la revendication 1 ou 2, **caractérisé en ce que** les cavités en forme de coupe (3) sont fuselées du côté ouvert (4) vers le fond (5).

4. Dispositif selon l'une quelconque des revendications précédentes, **caractérisé en ce que** la section des cavités (3) selon un plan perpendiculaire à la direction (BB') de l'empilement des supports (2) est sensiblement rectangulaire ou carrée.

5. Dispositif selon l'une quelconque des revendications précédentes, **caractérisé en ce que** le diamètre des passages (6) correspond sensiblement au diamètre d'une brochette (13).

6. Dispositif selon l'une quelconque des revendications précédentes, **caractérisé en ce que** les passages (6) sont munis d'un guide fuselé (14) pour appliquer une brochette (13).

7. Dispositif selon l'une quelconque des revendications précédentes, **caractérisé en ce qu'**il est muni de moyens de positionnement (5) de sorte que, lorsque les supports (2) sont empilés, les passages (6) soient situés l'un au-dessus de l'autre.

8. Dispositif selon l'une quelconque des revendications précédentes, **caractérisé en ce que** les supports (2) sont essentiellement composés de deux parties symétriques ou identiques (7).

9. Dispositif selon la revendication 8, **caractérisé en ce que** les parties (7) sont munies de moyens de couplage complémentaires (8) pour coupler ensemble les parties (7), de préférence sous la forme de goupilles de positionnement (9) qui peuvent agir conjointement avec des trous ajustés (10).

10. Dispositif selon l'une quelconque des revendications précédentes, **caractérisé en ce qu'**il est muni d'un mécanisme (17) pour appliquer des brochettes (13), qui est constitué de deux rouleaux ou roues (18), dont au moins un(e) peut être entraîné(e) et entre lesquel(le)s les brochettes (13) peuvent être maintenues.

11. Dispositif selon l'une quelconque des revendications précédentes, **caractérisé en ce que** qu'il est muni d'un premier tiroir (19), dans lequel les supports (2) peuvent être aménagés l'un à côté de l'autre de manière adéquate, afin de remplir les cavités (3) de nourriture (15) via le côté ouvert (4), et d'un second tiroir (20) pour appliquer des brochettes (13), dans lequel les supports (2) sont maintenus après avoir été empilés l'un sur l'autre.

12. Dispositif selon la revendication 11, **caractérisé par** la dotation de moyens pour transmettre les supports (2) du premier tiroir (19) au second tiroir (20).

13. Dispositif selon la revendication 12, **caractérisé en ce que** les moyens mentionnés ci-dessus utilisent des guides qui sont aménagés aux extrémités éloignées (28) des supports (2).

14. Dispositif selon l'une quelconque des revendications précédentes, **caractérisé en ce que** des moyens (24) sont mis en oeuvre pour déplacer les parties (7) des supports (2) à distance l'une de l'autre, après que les brochettes (13) ont été terminées, de manière à pouvoir retirer les brochettes de viande (16) des supports (2).

15. Procédé pour composer des brochettes de viande (16), dans lequel on fait usage d'un dispositif (1) selon l'une quelconque des revendications précédentes, **caractérisé en ce qu'**il consiste à : placer les morceaux de nourriture (15) des brochettes de viande à composer dans un support mentionné ci-dessus (2), de sorte que la nourriture (15) soit fournie par le côté ouvert (4) ; empiler les supports (2) l'un à côté de l'autre ou l'un au-dessus de l'autre, de sorte que le fond (5) d'un support (2) se termine au-dessus ou contre le côté ouvert (4) du support suivant (2) ; pousser au moins une brochette (13) via le côté ouvert (4) des supports empilés (2) à travers la nourriture (15) et les passages (6) dans les fonds (5) des supports empilés (2) ; et retirer la ou les brochettes de viande (16) en démontant les parties (7) des supports empilés (2).
